Europäisches Patentamt

European Patent Office

Office européen des brevets

(19)

(11) Publication number: **0 407 138 A2**

# EUROPEAN PATENT APPLICATION

(12)

(21) Application number: 90307254.4

(22) Date of filing: 03.07.90

(51) Int. Cl.⁵: **C08K 9/04, C08F 2/44, C08F 10/02**

(30) Priority: 05.07.89 US 376266

(43) Date of publication of application:
09.01.91 Bulletin 91/02

(84) Designated Contracting States:
AT BE DE FR GB

(71) Applicant: SHELL OIL COMPANY
900, Louisiana Street
Houston Texas 77002(US)

(72) Inventor: Chatterjee, Ananda M.
14411 Locke Lane
Houston, Texas 77077(US)

(74) Representative: Myerscough, Philip Boyd et al
J.A.Kemp & Co. 14, South Square Gray's
InnInn
London, WC1R 5EU(GB)

(54) In-reactor stabilization of polymers via coated stabilizers.

(57) The invention provides a method for making coated additive particles by forming a polyolefin emulsion or dispersion, fluidizing particles of an additive, spraying the emulsion or dispersion on the fluidized particles of said additive and forming discrete coated additive particles. The coated particles can be used to provide in-reactor stabilization of a polyolefin during a polymerization reaction.

EP 0 407 138 A2

## IN-REACTOR STABILIZATION OF POLYMERS VIA COATED STABILIZERS

The invention relates to a method for making coated additive particles for use in an olefin polymerization reaction, for example to provide in-reactor stabilization of olefin polymers.

Prior art methods for incorporating additives into polymers have involved polymerizing a monomer and then adding stabilizers to the resulting polymer by extrusion or other melt mixing techniques, thereby producing pellets. Stabilizers have traditionally not been added to the polymerization reactor because neat stabilizers often deactivate the polymerization catalyst and terminate the polymerization reaction. Various disadvantages are associated with such melt mixing techniques, including an appreciable downtime for cleaning of the blending equipment, heat sensitivity of some additives, and pelletization problems, particularly with very high melt flow (> 100g/10 min) polypropylene resins.

Among prior disclosures of methods of blending additives with polymers, US-A-3,591,409 describes preparing a composition by high intensity blending of a mixture of particulate thermoplastic resin, hydrocarbon wax and particulate solid additive at high temperatures. This method requires that all ingredients be placed in the mixer at once, without the separate pretreatment of any one of the components of the mixture.

A variety of patents teach methods for making discrete particles or capsules containing different kinds of fill materials. US-A-4,306,993 discloses a method for making microcapsules which can be used to tag books, paper currency and explosives and explosive devices. DE-A-2,160,852 discloses microcapsules containing wetting agents, and US-A-4,224,422 discloses a curable epoxy resin system useful as an adhesive. The curable one part system comprises a rupturable impermeable microcapsule having shell walls of a crosslinked interfacial polyurethane-polyether reaction product of an aromatic polyisocyanate. US-A-4,382,326 describes acrylate copolymer microsphere structures using glycerol and cycloaliphatic polyepoxides filled with a liquid Lewis acid-glycerol complex. Tacky spherical acrylate copolymer particles are disclosed in US-A-4,098,945, which describes a liquid-filled capsule having a microporous capsule wall made of a dispersed solid-phase and a continuous phase. Here the capsule forms a single phase in the liquid state but separate phases when cooled to a solid and the volume contraction ratio is at least 1.2:1. The preferred capsules are spherical and the wall is made of the solid, semi-crystalline polyolefin, an amorphous hydrocarbon resin and an at least partially crystalline wax capable of separating out as a discontinuous mass.

Liquid-filled capsules for the controlled release of fertilizers having a microporous wall of semi-crystalline polyolefin, hydrocarbon resin and a wax are disclosed in US-A-4,002,458. US-A-3,985,840 describes microspheres prepared by forming a homogeneous molten liquid phase using a solid semi-crystalline polyolefin, a hydrocarbon resin and at least partially crystalline wax, and wherein the liquid phase is allowed to cool and the wax separates out as a discontinuous mass dispersed throughout the matrix. US-A-3,977,992 discloses a controlled release capsule prepared from 2% wax, 5% hydrocarbon resin and the remainder of semi-crystalline polyolefin such as polyethylene.

It has long been desired to find a method of cheaply blending stabilizers, antioxidants and other additives into polymers in a reactor without compounding or extruding, in such a way that these additives are dispersed throughout the polymer. It has also been desired to achieve a method of blending additives into polymers without requiring the use of solvents. The present invention seeks to solve these problems by providing a method for making coated additive particles that can act as an antioxidant and/or a stabilizer when incorporated into a polymer during polymerization.

In EP-A-327246, published 9 August 1989, we describe the making of coated additive particles by spraying molten wax onto heated fluidized additive particles. However, relatively low melting additives cannot be coated by this method since additives will melt in a fluidized bed of additive particles. The present invention overcomes this problem.

The present invention provides a method for making coated additive particles suitable for use in an olefin polymerization reaction, which method comprises forming a polyolefin emulsion or dispersion, fluidizing particles of an additive, spraying the emulsion or dispersion on the fluidized particles of said additive and forming discrete coated additive particles.

In accordance with the method of the invention the continuous phase of the emulsion or dispersion (usually water) rapidly evaporates in the fluidized bed of additive particles leaving a coating of polyolefin on the particles. The coated additive particles can then be added to an olefin polymerization reactor thereby to produce a polymer which already has the additive incorporated therein. The method of the invention thus provides a lower temperature and lower energy cost coating operation than the method of EP-A-327246.

The production of additive-containing polymer directly in a polymerization reactor eliminates the extrusion pelletization step currently used to incorporate additives. This reduced thermal history increases the oxidative stability of the polymer.

Uncoated additives introduced directly to polymerization reactors deactivate the catalyst and thereby stop the polymerization. When propylene polymerization was attempted with "Irganox" 3114 antioxidant ("Irganox" is a Registered Trade Mark) and ZnO (acid acceptor) directly added to the reactor, no polymer was produced.

Coated additives particles produced by the method of the invention suitably have diameters from 50 to 8000, preferably 100 to 8000, $\mu$m. The coated additive particles consist essentially of a core of at least one additive coated with a polyolefin which should be solid at the polymerization temperature of the reaction in which the coated particles are used to provide in-reactor stabilization. In a preferred embodiment, the coating comprises between 5% or 15% and 85%, preferably between 30% and 50%, by weight of the coated particles, the percentages being based on the total composition of the coated particles. The coating acts as a barrier between the polymerization catalyst system and the additive during the polymerization. The additive core of the coated particles can be one or more of a variety of additives, including but not limited to: acid acceptors, processing stabilizers, antioxidants, metal deactivating agents, nucleating agents, pigments, heat stabilizers, light stabilizers, lubricants, antiblock agents, antistatic agents and slip additives. Any additive used should be capable of enhancing the properties and processability of the polymer produced as a result of the polymerization reaction during which the coated particles are used to provide in-reactor stabilization. Preferred additives include antioxidants such as 1,3,5-trimethyl-2,4,6-tris(3,5-di-tert-butyl-4-hydroxy-benzyl) benzene (A); octadecyl 3-(3',5'-di-tert-butyl-4'-hydroxyphenyl) propionate (B); tetrakis[methylene (3,5-di-tert-butyl-4-hydroxyhydrocinnamate)] methane (C); tris[3,5-di-t-butyl-4-hydroxybenzyl) isocyanurate (D); 3,5-di-tert-butyl-4-hydroxyhydrocinnamic acid triester with 1,3,5-tris(2-hydroxyethyl)-s-triazine-2,4,6(1H,3H,5H)-trione (E); 1,3,5-tris-(4-tert-butyl-3-hydroxy-2,6-dimethylbenzyl) 1,3,5-triazine-2,4,6-(1H,3H,5H)-trione (F); bis-[3,3-bis(4' hydroxy-3'tert-butyl-phenyl)-butanoic acid]-glycolester (G); 2,2'-methylene-bis-(4-methyl-6-tertiary-butyl-phenol)- terephthalate (H); 2,2-bis[4-(2-(3,5-di-tert-butyl-4-hydroxyhydrocinnamoyloxy)) ethoxy-phenyl]propane (I), calcium bis[monoethyl(3,5-di-tert-butyl-4-hydroxybenzyl)phosphonate] (J); 1,2-bis(3,5-di-tert-butyl-4-hydroxyhydrocinnamoyl)hydrazine (K) and 2,2'-oxamido bis-[ethyl 3-(3,5-di-tert-butyl-4-hydroxyphenyl)propionate] (L). Additives which may be used separately or blended with the above listed antioxidants, include processing stabilizers such as phosphites and phosphonites, acid acceptors such as metallic stearates, metal oxides and hydrotalcites (e.g., Kyowa Chemical Industries' DHT-4A and DHT-4C); nucleating agents; lubricants; antistatic agents; fillers such as barium sulfate, clays, calcium carbonate and silicates; pigments such as titanium dioxide, zinc oxide, lead chromate, cadmium sulfides, cadmium selenide, zinc sulfide and basic carbonate of white lead; stabilizers such as tribasic lead sulfate, basic lead chlorosilicate, dibutyl tin oxide and salts of lead, zinc, cadmium or tin; flame retardants such as antimony oxide; ultra-violet stabilizers; slip agents; anti-block agents; and other solid additives which enhance the properties and processability of a polyolefin to which they are added.

The coating which derives from the polyolefin emulsion or dispersion can be of a polyolefin obtained by the polymerization of at least one olefin of 2 to 18 carbon atoms, preferably 2 to 8 carbon atoms, such as polypropylene wax (including chemically modified, e.g. maleated, polypropylene wax), polybutylene wax or polyethylene wax. A hydrocarbon wax, such as an emulsifiable polypropylene wax with number average molecular weight of 3000 to 6000, functions well as a coating. Specific examples of suitable olefins whose polymers are usable as the outer coating include ethylene, propylene, butene-1, copolymers of ethylene and propylene, copolymers of propylene and butene-1, copolymers of ethylene with at least one $C_3$ to $C_{18}$, preferably $C_3$ to $C_8$, alpha olefin. The term "polyolefin" as applied to the coating thus is intended to comprehend both homopolymers and copolymers. In a preferred embodiment, the fluidized additive particles to be coated are heated to a temperature between 25°C and 60°C. Higher temperatures should be avoided since relatively lower melting additives will tend to melt and thereby not be coatable.

The polyolefin selected for the outer coating should not cause color formation, staining or degradation of the base polymer composition in which the coated additive particles are to be incorporated. The polyolefin of the outer coating should be relatively easy to incorporate into the polymer. More specifically the outer coating should not be reactive with the base polymer. If polypropylene wax is used as the coating material, it (in low concentration) can be left in the final polypropylene composition.

The outer coating material may be natural or synthetic. Typical examples of suitable coating materials include emulsifiable hydrocarbon waxes, preferably polyolefin waxes such as polypropylene and polyethylene, paraffin wax or ester waxes. Other waxes that can be used include mineral waxes, such as montan wax, amide waxes such as ethylene distearamide and ethylene diresorcinolamide, halogenated hydrocarbon waxes, such as chlorinated paraffin waxes, chlorinated naphthalenes and ketone waxes, such as stearone.

The preferred liquid vehicle, or continuous phase, of the emulsion or dispersion is water because it is cheap and can be disposed of safely and easily. Non-aqueous emulsions and dispersion of additives can be used.

The melting point of the coating should be at least high enough so that the outer coating remains solid at room and storage temperatures. It is preferred that the coating material soften or melt at from 100° C to 180° C for convenience of its incorporation during propylene polymerization.

Waxes and wax-like materials are suitably employed alone or in mixtures of various proportions as the coating layer. A particularly preferred outer coating comprises chemically modified polypropylene because it can be emulsified easily. Maleic anhydride - modified polypropylene waxes are available commercially.

One or more coatings are applied to the additive core by spraying. The additive particles can be fluidized using air and an aqueous emulsion or dispersion of the coating material can then be sprayed onto the fluidized additive particles. Sufficient coating material should be added to the fluidized additive to form the coated particles of additive having desired particle size such as 100 to 8000 μm. The additive core can be coated with additional layers to form the coated particles. Typical operating conditions for the fluidized bed are shown in Table I.

Following the completion of the coating step, the coated additive particles can be introduced into a polymerization reactor for incorporation into the polymer. This incorporation advantageously occurs without any additional solvent or diluents which would need to be removed.

For gas phase fluidized bed polymerization of an olefin, the coated additive particles can be introduced into the fluidized bed in the reactor. Depending on the particular additive and its function, the amounts to be incorporated into the polymer can be varied in accordance with the percentages known to the art to achieve the desired end-use properties of the resin.

In addition to coated additive and monomer, a catalyst system comprising cocatalyst, selectivity control agent and procatalyst is typically added to the polymerization reactor. The coated particles are suitable for use in all types of polymerization, such as liquid pool polymerization, gas phase polymerization, solvent slurry polymerization, and polymerization processes described in US-A-4,414,132 and US-A-4,329,253. A preferred catalyst system is a magnesium supported titanium halide/aluminum alkyl catalyst system which system comprises

(i) a procatalyst component obtained by halogenating a magnesium compound of the formula $MgR'R''$ - (wherein $R'$ is an alkoxide or aryloxide group or halogen; and $R''$ is an alkoxide, alkyl carbonate, aryloxide or halogen) with a halide of tetravalent titanium in the presence of an electron donor, contacting the halogenated product with a halide of tetravalent titanium, and recovering the solid product;

(ii) a cocatalyst component comprising an organoaluminum compound; and

(iii) a selectivity control agent. Sieved fractions of the coated additives can also be added to the polymerization reactor.

Good results are obtained with polypropylene wax coatings on solid additives for incorporation into polypropylene. These coatings serve to prevent early or inadvertent deactivation of the catalyst by the additive underlying the coating. One important advantage occurs in further melt processing of the polymer by the customer in an extruder: the frictional or applied heat causes the wax coating to melt and thereby promotes dispersion of the additive throughout the resin. Since the polypropylene in the emulsion is predominantly isotactic, it can be left in the final product.

From 5 to 85 percent by weight of additive (based on the total weight of the particle) can be used in a coated particle for use in stabilizing a polymer such as a polyolefin. Tests have been conducted using a number of different kinds of additives (coated with a polypropylene emulsion) including "Irganox" 1010, an additive (for polymers) which is particularly useful as a stabilizer for polypropylene compositions.

The coated additive particles can be used to reduce abrasion of the surfaces of processing machinery, and thereby reduce undue wear and erosion of metal surfaces (including the working parts of the processing equipment) in contact with the final resin composition. Screw and barrel cleaning presents problems in conventional extrusion operations. Metal contamination caused by abrasion is a source of discoloration and degradation of the resins. The use of the coated additive particles reduces the magnitude of this problem. Such coated additive particles can minimize the dusting tendencies of the finely divided additives and thereby minimize dust explosion hazards.

The coated additive particles are advantageously used in polymers such as polypropylene, polyethylenes including linear low density polyethylene, chlorosulfonated polyethylene, ethylene-propylene copolymer rubbers, ethylene-propylene-diene terpolymers; and butyl, butadiene-styrene, silicone or acrylonitrile rubbers. The coated additive particles are also suitable for use in plastics, for example polyvinyl chloride polymers and copolymers, polyethylene and copolymers, polypropylene, polyvinylidene chloride, ethylene-carbon monoxide polymers, polystyrene, polyimides, polyamides, polyacetals, acrylonitrile-butadiene-styrene, polycarbonates, polycaprolactone, poly(ethylene oxide), chlorinated polyethylene, poly-

4

methyl methacrylate and polysulfones.

The invention will be described in greater detail by reference to the examples presented below. These Examples are not intended to limit the invention to the embodiments specifically shown therein. All parts and percentages given are by weight unless otherwise specified.

## Examples

Additives were coated with polypropylene (PP) wax from an emulsion by the method described below and then added to a propylene polymerization reactor. The polypropylene coating on the additives acted as a barrier between the polymerization catalyst and the additives, preventing deactivation of the catalyst by the additive during polymerization.

The solid additive mixture used was a blend of a low melting phenolic antioxidant ("Irganox" 1010 from Ciba-Geigy Corporation), distearyl thiodipropionate (DSTDP) and calcium stearate. Fluidized bed coating experiments were conducted using the Wurster type process, described in H.S. Hall and R.E. Pondell, Chapter 7 in "Controlled Release Technologies: Methods, Theory and Applications", Vol. II, A.F. Kydonieus, Ed, CRC Press, Boca Raton, FL, 1980. In this process the coating material is sprayed or atomized through a nozzle onto a fluidized bed of solid core material.

## Materials

The composition of the additive mixture was "Irganox" 1010, DSTDP and calcium stearate in the mass ratio 10:15:5. The mixture was prepared by dry blending the solid stabilizer particles.

A polypropylene emulsion was used for coating the additives in the fluidized bed. The emulsion was Michem Emulsion 43040, produced by Michelman, Inc., Cincinnati, Ohio. This aqueous emulsion has 40% total solids. Its composition is 60% water, about 32% modified polypropylene wax (Eastman Chemical's Epolene E43 - a maleated polypropylene), and about 8% nonionic emulsifier.

## Coating of Additives

In the coating experiments, a fluidized bed equipped with a spray nozzle in the bottom was used to prepare the coated particles. The coating chamber was 10 cm (4 inches) in diameter at the bottom and 15 cm (6 inches at the top. The spray nozzle was mounted at the base of this chamber. The aqueous emulsion of polypropylene at ambient temperature was delivered by a peristaltic pump to the spray nozzle. The atomizing air produced a fine spray of the polypropylene emulsion which coated the particles of additives in the fluidized bed. The water rapidly evaporated in the fluidized bed. The operating conditions are shown in Table I. Note the low temperature of the fluidizing air and also the ambient temperature pumping of the aqueous polypropylene emulsion to the spray nozzle. These features allow the coating of even relatively low melting additives.

Three coated stabilizer samples were prepared. 400 gms. additive mixture were taken in the coating chamber. Three levels of coating were applied, resulting in 24%, 50% and 60%w (samples A, B, C respectively) polypropylene coating in the final product. The fluidizing air inlet temperature was 44-52° C and outlet 24-28° C. After 46 minutes of coating, sample A was withdrawn from the fluidized bed and the coating continued. After 89 minutes sample B was withdrawn. To prepare sample C the coating continued for another 70 minutes.

## Polymerization

Batch liquid propylene polymerizations (bulk) were conducted in a 3 dm 3 (one U.S. gallon) autoclave (2.7 liter propylene charge) at 67° C for one hour using a catalyst. The following injections were made sequentially to the reactor containing propylene and hydrogen. First triethyl aluminum (TEA) cocatalyst (2.1 millimole) and diisobutyl dimethoxysilane selectivity control agent (SCA) (50 microliter) were mixed. The catalyst slurry (0.3 ml in mineral oil) was added to the TEA/SCA mixture. After waiting 20 minutes, the final mixture was injected into the reactor. After 2 minutes the coated additive, suspended in mineral oil, was injected.

The catalyst is prepared by halogenating a magnesium compound of the formula $MgR'R''$ (where $R'$ is an alkoxide or aryloxide group or halogen; and $R''$ is an alkoxide, aryloxide, alkyl carbonate or halogen) with a halide of tetravalent titanium in the presence of an electron donor, contacting the halogenated product with a halide of tetravalent titanium, washing it to remove unreacted Ti compound and electron donor, contacting the halogenated product with a halide of tetravalent titanium, washing it with an inert solvent to remove unreacted Ti compounds and recovering the solid product.

Other organoaluminum compounds than TEA can be used, for example diethyl aluminum chloride, ethyl aluminum dichloride, or ethyl aluminum sesquichloride, and such other selectivity control agents as paraethoxy benzoate, ethyl paratoluate, paramethoxy ethyl benzoate, phenyl triethoxysilane and 2,2,6,6-tetramethyl piperidine.

Stereoselectivity and Stability Test Procedure

Xylene Solubles (XS) of the polypropylene were determined as the percentage of material remaining soluble after cooling a solution of polypropylene in xylene from its boiling point to room temperature. XS is a measure of stereoregularity or isotacticity of the polypropylene.

The thermo-oxidative stability of the polypropylene product was determined by both oven aging and oxidative induction time (OIT) measurements after compression molding the polypropylene into 0.25 mm (10 mil) thick specimens. For oven aging 5 cm X 6.25 cm (2 inch X 2.5 inch) specimens were placed in a forced circulation hot air oven maintained at 150° C. The aging procedure followed the guidelines of ASTM D3012. The samples were inspected (five days a week) and failure was indicated by characteristic powdery disintegration and brittleness of the polypropylene.

For OIT measurement, about 5 mg of the compression-molded sample was crimped in a Difference Scanning Calorimeter (Perkin-Elmer model DSC-7). The sample was heated to the test temperature under nitrogen, and then the nitrogen gas was replaced by oxygen. From this time (t = 0) onward, scanning was done in the time mode. A tangent was drawn to the exothermic oxidation peak. The intersection of this tangent with the initial baseline, measured from t = 0, gave the oxidative induction time or OIT. Note that higher oven life or OIT values indicate greater oxidative stability of the polymer.

Results

The data in Table II show that the polypropylene produced in the reactor by the method of the invention had good yield and stereoselectivity (as indicated by low xylene solubles) and also had significant level of thermo-oxidative stability, as shown by both oven aging and oxidative induction time (OIT) of the polypropylene, compared to unstabilized polypropylene. The polypropylene produced was of high molecular weight, as indicated by the melt flow rate data.

Thus, it can be seen that the process of the present invention can be advantageously employed efficiently to produce a resin containing dispersed additives, avoiding compounding during extrusion pelletization of the resin. This means that polymerization to produce a highly stable product can be accomplished with an expenditure of a minimum of man-hours and minimal equipment costs compared with known techniques.

Concentrate

The production of concentrates or masterbatches of stabilizer, pigments and other additives is an important segment of the polymer industry. Before fabrication, the concentrates (containing additive) are blended with the polymer to achieve a desired final additive concentration. Additive concentration in the masterbatch can be controlled by controlling the coating layer thickness, as by controlling the time spent by the particles of additive in the fluidized bed (see samples A, B and C above). Current concentrate manufacturing technology involves extrusion (often with expensive twin-screw equipment) or other mechanical mixing process. Screw and barrel cleaning, maintenance problems, energy cost, heat sensitivity of some additives and pelletization often present problems in such operations. This invention presents a lower energy, non-extrusion route to additive or pigment concentrate preparation.

Concentrates suitable for polyethylene resins can be prepared by fluidized bed coating of additive or pigment by polyethylene wax or other polyethylene resin.

Table 1

| | | Fluidizing air temp(°C) | | | | Atomizing Air | | |
|---|---|---|---|---|---|---|---|---|
| Coated Sample | % PP in coated particles | In | Out | Fluidizing air flow rate m³/s (SCFM) | Pump speed (RPM) | Pressure kPa (psi) | Flow rate m³/s (SCFH) | |
| A | 24 | 52 | 28 | 0.009 (19) | 9 | 110 (16) | 7.9x10⁻⁴ | 100 |
| B | 50 | 49 | 26 | 0.009 (19) | 9 | 110 (16) | 6.7x10⁻⁴ | 85 |
| C | 60 | 44 | 24 | 0.009 (19) | 9 | 110 (16) | 6.7x10⁻⁴ | 85 |

First row title: Operating conditions for fluidized bed coating of additives

Table II

| | Propylene Polymerization[a]Using Coated Additives and Properties of Resultant PP | | | | | | |
|---|---|---|---|---|---|---|---|
| Example | Coated Additive[b] used (See Table 1) | Polymer Yield, kg PP/g cat. | XS (W%) | Bulk density (g/cm³ | Melt flow[c] (g/10 min) | Oven Life (days) at 150°C | OIT (mins.) at 190°C |
| 1 | C | 11.4 | 4.2 | 0.37 | 5.0 | 16 | 23.7 |
| 2 | B | 12.5 | 4.4 | 0.37 | 4.9 | 39 | 22.3 |
| 3 | A | 13.4 | 4.2 | 0.37 | 3.9 | 91 | >40 |
| 4 | B | 7.1 | 3.9 | 0.35 | 12.1 | 22 | 7.9 |
| 5 | A | 7.7 | 4.0 | 0.36 | 7.3 | 89 | 32.1 |
| Unstabilized PP | - | - | - | - | 3.0 | 0.3 | 1.8 |

[a] 32 mmol $H_2$ was used in all polymerization runs
[b] 1.0 gm. coated additive was used in Examples 1-3; 2 gm coated additive was used in examples 4 and 5
[c] Measured by ASTM D-1238 condition L.

**Claims**

1. A method for making coated additive particles suitable for use in an olefin polymerization reaction, which method comprises forming a polyolefin emulsion or dispersion, fluidizing particles of an additive, spraying the emulsion or dispersion on the fluidized particles of said additive and forming discrete coated additive particles.

2. A method according to claim 1 wherein particles having a diameter of from 50 to 8000 μm are formed.

3. A method according to claim 1 or 2 wherein an inert gas is used to fluidize the particles of said additive.

4. A method according to claim 1, 2 or 3 wherein the steps are repeated to form a second coating on the particles.

5. A method according to any one of the preceding claims wherein said coating comprises between 15% and 85% by weight of the coated additive particles.

6. A method according to claim 5 wherein said coating comprises between 30% and 50% by weight of the coated additive particles.

7. A method according to any one of the preceding claims wherein said polyolefin is derived from at least one olefin of 2 to 18 carbon atoms.

8. A method according to claim 7 wherein said polyolefin is at least one of polypropylene wax, polybutylene wax and polyethylene wax.

9. A method according to claim 8 wherein said polyolefin is a maleated polypropylene wax.

10. A method according to any one of the preceding claims wherein said additive comprises at least one antioxidant, processing stabilizer or acid acceptor.

11. A method according to claim 10 wherein the additive comprises at lest two different antioxidants.

12. A method according to any one of the preceding claims wherein the additive is at least one of 1,3,5-trimethyl-2,4,6-tris(3,5-di-tert-butyl-4-hydroxybenzyl) benzene; octadecyl 3-(3',5'-di-tert-butyl-4'-hydroxyphenyl)propionate; tetrakis[methylene (3,5-di-tert-butyl-4-hydroxyhydrocinnamate)] methane; tris[3,5-di-t-butyl-4-hydroxybenzyl)isocyanurate; 3,5-di-tert-butyl-4-hydroxyhydrocinnamic acid triester with 1,3,5-tris(2-hydroxyethyl)-s-triazine-2,4,6(1H,3H,5H)-trione; 1,3,5-tris(4-tert-butyl-3-hydroxy-2,6-dimethylbenzyl) 1,3,5-triazine-2,4,6-(1H,3H,5H)-trione; bis-[3,3-bis(4' hydroxy-3'tert-butyl-phenyl)-butanoic acid]-glycolester; 2,2'-methylene-bis-(4-methyl-6-tertiary-butyl-phenol)terephthalate; 2,2-bis[4-(2-(3,5-di-tert-butyl-4-hydroxyhydrocinnamoyloxy) ethoxy-phenyl]propane; calcium bis[monoethyl(3,5-di-tert-butyl-4-hydroxybenzyl) phosphonate]; 1,2-bis(3,5-di-tert-butyl-4-hydroxyhydrocinnamoyl)hydrazine; and 2,2'-oxamidobis-[ethyl 3-(3,5-di-tert-butyl-4-hydroxyphenyl)propionate].

13. A method according to any one of the preceding claims wherein the coated additive particles comprise a further additive which is a metal deactivating agent, pigment, heat stabilizer, light stabilizer, lubricant, antiblock agent, antistatic agent, slip additive, nucleating agent, filler or flame retardant.

14. A process for providing in-reactor stabilization of a polyolefin during a polymerization reaction comprising the steps of a method as claimed in any one of the preceding claims, adding the resulting discrete coated additive particles to a polymerization reactor and polymerizing an olefin in said reactor in the presence of a polymerization catalyst and said coated additive particles.

15. A process according to claim 14 wherein said polymerization catalyst is a magnesium supported titanium halide/aluminum alkyl catalyst system which system comprises

(i) a procatalyst component obtained by halogenating a magnesium compound of the formula MgR'R'' - (wherein R' is an alkoxide or aryloxide group or halogen; and R'' is an alkoxide, alkyl carbonate, aryloxide or halogen) with a halide of tetravalent titanium in the presence of an electron donor, contacting the halogenated product with a halide of tetravalent titanium, and recovering the solid product;

(ii) a cocatalyst component comprising an organoaluminum compound; and

(iii) a selectivity control agent.

16. A process according to claim 14 or 15 wherein the polymerization reaction is for the polymerization of an olefin of 2 to 18 carbon atoms.

17. A process according to claim 16 wherein the olefin polymerization reaction is a 1-butene polymerization reaction or a propylene polymerization reaction.